(19) Europäisches Patentamt
European Patent Office
Office européen des brevets

(11) **EP 2 742 264 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **12725799.6**

(22) Anmeldetag: **06.06.2012**

(51) Int Cl.:
*F16K 11/07* (2006.01)   *F16K 31/06* (2006.01)
*F15B 13/04* (2006.01)   *F16H 61/30* (2006.01)

(86) Internationale Anmeldenummer:
**PCT/EP2012/060679**

(87) Internationale Veröffentlichungsnummer:
**WO 2013/020737 (14.02.2013 Gazette 2013/07)**

(54) **SCHIEBERVENTIL MIT EINEM VENTILSCHIEBER**

SLIDE VALVE HAVING A VALVE SLIDE

DISTRIBUTEUR COMPORTANT UN TIROIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2011 DE 102011080667**

(43) Veröffentlichungstag der Anmeldung:
**18.06.2014 Patentblatt 2014/25**

(73) Patentinhaber: **Robert Bosch GmbH**
**70442 Stuttgart (DE)**

(72) Erfinder: **PILAWSKI, Andrzej**
**71665 Vaihingen/Enz (DE)**

(56) Entgegenhaltungen:
**DE-A1- 3 226 809      DE-A1- 4 224 469**
**DE-A1- 4 319 162      US-A1- 2004 000 347**
**US-A1- 2007 023 722**

**Beschreibung**

Stand der Technik

Die Erfindung betrifft ein Schieberventil nach dem Oberbegriff des Anspruchs 1, wie es beispielsweise aus DE-A-43 19 162 oder aus WO-A-2007/0023722 bekannt ist, sowie ein Automatikgetriebe nach dem nebengeordneten Anspruch 12.

Vom Markt her bekannt sind Automatikgetriebe von Kraftfahrzeugen, in denen eine oder mehrere Getriebekupplungen bzw. Stellzylinder zur Betätigung dieser Kupplungen, verwendet werden. Insbesondere werden doppelt wirkende Hydraulikzylinder verwendet, welche zwei durch einen Kolben getrennte hydraulische Kammern aufweisen und durch eine entsprechende Druckbeaufschlagung aktiv in beiden Bewegungsrichtungen verstellt werden können.

Zum Schalten des für die Betätigung des Hydraulikzylinders erforderlichen hydraulischen Volumenstroms werden beispielsweise Schieberventile in einer 4/3-Ausführung verwendet. Häufig weisen solche Schieberventile eine eingebaute Druckfeder ("Ventilfeder") sowie einen gegen die Druckfeder wirkenden Aktor auf. Der Aktor ist beispielsweise ein Elektromagnet. Ein jeweiliges Kräftegleichgewicht zwischen dem Aktor und der Ventilfeder bestimmt eine entsprechende axiale Position eines in dem Schieberventil bewegbaren Ventilschiebers.

Offenbarung der Erfindung

Das der Erfindung zugrunde liegende Problem wird durch ein Schieberventil nach Anspruch 1 sowie durch ein Automatikgetriebe nach dem nebengeordneten Patentanspruch gelöst. Vorteilhafte Weiterbildungen sind in Unteransprüchen angegeben.

Das erfindungsgemäße Schieberventil hat den Vorteil, dass es mit zwei Arbeitsanschlüssen derart betrieben werden kann, dass dann, wenn einem Aktor des Schieberventils keine Energie zugeführt wird, beide Arbeitsanschlüsse von einem einen Versorgungsdruck aufweisenden hydraulischen Zulauf getrennt und mit einem hydraulischen Ablauf verbunden sind. Insbesondere ist es nicht erforderlich, dass ein in dem Schieberventil axial bewegbarer Ventilschieber axiale und/oder radiale Bohrungen aufweist und/oder dass zusätzliche Steuerabschnitte benötigt werden. Dadurch können - beispielsweise beim Betätigen eines doppelt wirkenden Hydraulikzylinders - Energie gespart und Kosten gesenkt werden.

Um einen Kolben des doppelt wirkenden Hydraulikzylinders mittels des Schieberventils zu steuern, wird jeweils eine von zwei hydraulischen Kammern mit dem Versorgungsdruck eines Fluids (Hydrauliköl) beaufschlagt. Dabei wird zugleich die jeweils andere Kammer mit einem vergleichsweise geringen Druck beaufschlagt ("entlüftet"), indem diese beispielsweise mit einem hydraulischen Ablauf verbunden wird. Wird der Kolben dagegen nicht (mehr) bewegt, so kann mittels des Schieberventils der Versorgungsdruck von dem Hydraulikzylinder abgeschaltet und beide Kammern mit dem hydraulischen Ablauf verbunden werden.

Das erfindungsgemäße Schieberventil weist einen Ventilschieber auf, welcher durch einen Aktor in einer ersten Richtung und durch eine Beaufschlagungseinrichtung in einer zweiten, der ersten entgegengesetzten Richtung beaufschlagt werden kann. Die Beaufschlagungseinrichtung ist vorzugsweise eine axial wirkende Ventilfeder, welche beispielsweise als Schraubenfeder ausgeführt ist. Zur Steuerung des doppelt wirkenden Hydraulikzylinders weist das Schieberventil einen ersten und einen zweiten Arbeitsanschluss, sowie vorzugsweise einen Zulaufanschluss und einen ersten und einen zweiten Ablaufanschluss auf. Der Zulaufanschluss bzw. die Ablaufanschlüsse können in Abhängigkeit von einer axialen Position des Ventilschiebers mit dem jeweiligen Arbeitsanschluss hydraulisch verbunden werden. Dazu weist der Ventilschieber entsprechende Steuerabschnitte an seinem Umfang auf. Erfindungsgemäß ist vorgesehen, dass ein dem ersten Arbeitsanschluss zugeordneter Steuerabschnitt eine Durchmesserstufe und/oder eine sich axial erstreckende Nut und/oder eine sich axial erstreckende Abflachung aufweist. Dies ist derart ausgeführt, dass dann, wenn der Aktor den Ventilschieber nicht beaufschlagt, der erste Arbeitsanschluss mit dem ersten Ablaufanschluss mittels der Durchmesserstufe und/oder der Nut und/oder der Abflachung hydraulisch verbunden ist. Zugleich ist der zweite Arbeitsanschluss mit dem zweiten Ablaufanschluss hydraulisch verbunden. Dabei wirkt die Beaufschlagungseinrichtung in der zweiten Richtung auf den Ventilschieber ein, so dass der Ventilschieber eine definierte Position, vorzugsweise an einem Ende seines axialen Bewegungsspiels annehmen kann. Eine axiale Länge der Nut bzw. der Abflachung erstreckt sich - vergleichbar zu der Durchmesserstufe - vorzugsweise nur über einen Teil der axialen Länge des dem ersten Arbeitsanschluss zugeordneten Steuerabschnitts in Richtung auf den ersten Ablaufanschluss. Die erfindungsgemäße Durchmesserstufe weist insbesondere den Vorteil auf, dass eine eventuelle Temperaturabhängigkeit der Viskosität des Hydrauliköls die Funktion des Schieberventils nicht oder nur unwesentlich beeinträchtigt.

Durch den erfindungsgemäß vergrößerten "Entlüftungsquerschnitt" zwischen dem ersten Arbeitsanschluss und dem ersten Ablaufanschluss wird in einem stromlosen Zustand des Aktors ein über die Leckage vom Zulaufanschluss P zum ersten Arbeitsanschluss A entstehender unerwünschter Druckaufbau im Wesentlichen verhindert. Dabei soll der beschriebene Entlüftungsquerschnitt einerseits nicht zu klein sein, damit eine sichere Entlüftung ermöglicht wird. Andererseits soll der Entlüftungsquerschnitt nicht zu groß sein, um einen am Arbeitsanschluss zum Betätigen des doppelt wirkenden Hydraulikzylinders erforderlichen Druckaufbau sicher und schnell zu ermöglichen.

Das Schieberventil ist besonders gut zur Steuerung des doppelt wirkenden Hydraulikzylinders geeignet, wenn es als ein 4/4-Wegeventil ausgeführt ist. Ein solches 4/4-Wegeventil weist vier Anschlüsse und vier Schaltstellungen auf. Dabei erfolgt in einem stromlosen Zustand des Aktors eine so genannte "Nullabschaltung", bei welcher der Zulaufanschluss gesperrt ist.

Weiterhin ist vorgesehen, dass ein Durchmesserspiel zwischen dem Ventilschieber und einer den Ventilschieber führenden axialen Bohrung in einem Bereich der Durchmesserstufe gemäß folgender Formel bemessen ist:

$$S2 \;=\; x \cdot S1 \cdot \sqrt[3]{\frac{I2}{I1}} \;,$$

wobei S2 das Durchmesserspiel, x eine einen hydraulischen Druck des ersten Arbeitsanschlusses charakterisierende Größe, S1 ein Durchmesserspiel zwischen dem Ventilschieber und der den Ventilschieber führenden axialen Bohrung in einem Dichtbereich, I1 eine axiale Überdeckung eines Steuerabschnitts in einem Bereich des Zulaufanschlusses, und I2 eine axiale Überdeckung der Durchmesserstufe in einem Bereich des ersten Arbeitsanschlusses sind. Dabei ist "x" ein Faktor für den sich durch eine Leckage einstellenden hydraulischen Druck am ersten Arbeitsanschluss. Damit wird ein Durchmesserspiel S2 beschrieben, welches in Bezug auf einen zwischen dem ersten Arbeitsanschluss und dem ersten Ablaufanschluss erreichbaren Durchströmquerschnitt einerseits, sowie den möglichen Leckagen andererseits, besonders optimiert ist.

Das Schieberventil wird entsprechend der beschriebenen Formel für S2 weiter verbessert, wenn die Größe x einen Wert in einem Bereich von x=4 bis x=12, vorzugsweise x=7 aufweist.

Wenn der dem ersten Arbeitsanschluss zugeordnete Steuerabschnitt alternativ zu der Durchmesserstufe die sich axial erstreckende Nut bzw. die sich axial erstreckende Abflachung aufweist, so ergeben sich im Betrieb des Schieberventils besonders günstige Verhältnisse, wenn eine Querschnittsfläche der Nut bzw. der Abflachung gemäß folgender Formel bemessen ist:

$$QF \;=\; x \cdot S1 \cdot D2 \;,\; \text{wobei QF die Querschnittsfläche, x die den hydraulischen}$$

wobei QF die Querschnittsfläche, x die den hydraulischen Druck des ersten Arbeitsanschlusses charakterisierende Größe, S1 das Durchmesserspiel zwischen dem Ventilschieber und der den Ventilschieber führenden axialen Bohrung in einem Dichtbereich, und D2 ein Durchmesser des Ventilschiebers an einem Steuerabschnitt sind.

Das Schieberventil wird entsprechend der beschriebenen Formel für QF weiter verbessert, wenn die Größe x einen Wert in einem Bereich von x=2 bis x=8, vorzugsweise x=4 aufweist.

Eine besonders geeignete Anwendung des erfindungsgemäßen Schieberventils ist die Steuerung eines doppelt wirkenden Hydraulikzylinders in einem Automatikgetriebe eines Kraftfahrzeugs. Insbesondere kann Energie zur Ansteuerung des Aktors in solchen Phasen gespart werden, in denen der Hydraulikzylinder keine Arbeitsbewegung ausführt.

Nachfolgend werden beispielhafte Ausführungsformen der Erfindung unter Bezugnahme auf die Zeichnung erläutert. In der Zeichnung zeigen:

Figur 1    eine erste Schnittdarstellung eines axialen Abschnitts eines Schieberventils;

Figur 2    eine vergrößerte Ansicht eines kreisförmigen Ausschnitts II der Figur 1;

Figur 3    eine zweite Schnittdarstellung eines axialen Abschnitts des Schieberventils;

Figur 4    eine erste Schnittansicht längs einer Linie IV-IV der Figur 3;

Figur 5    eine zweite Schnittansicht längs einer Linie IV-IV der Figur 3;

Figur 6    eine Schnittansicht des Schieberventils in einer ersten Position;

Figur 7    eine Schnittansicht des Schieberventils in einer zweiten Position;

Figur 8     eine Schnittansicht des Schieberventils in einer dritten Position; und

Figur 9     eine Schnittansicht des Schieberventils in einer vierten Position.

Es werden für funktionsäquivalente Elemente und Größen in allen Figuren auch bei unterschiedlichen Ausführungsformen die gleichen Bezugszeichen verwendet.

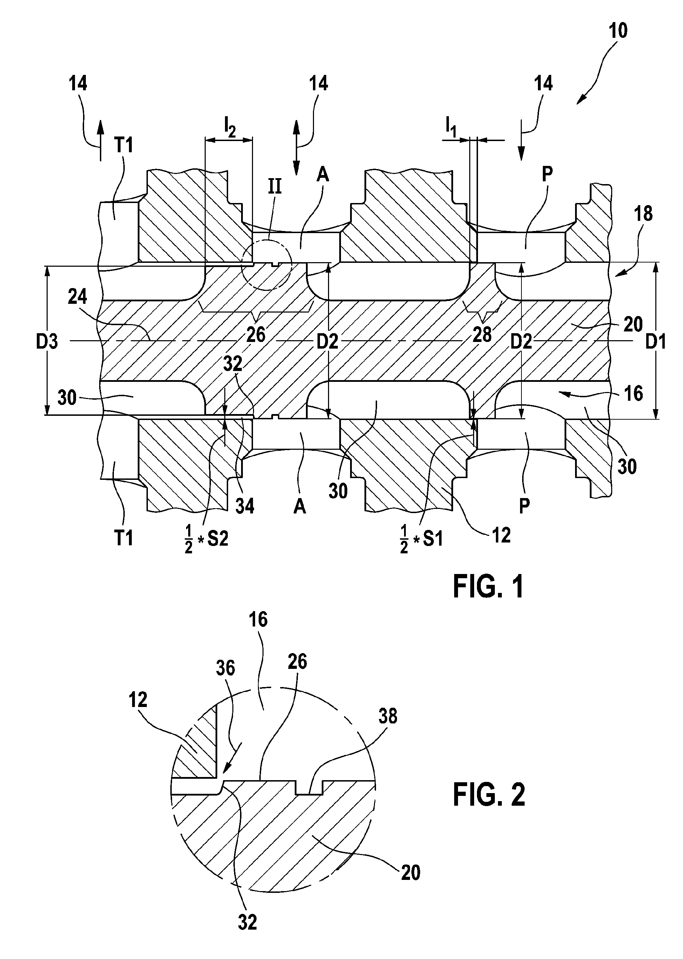

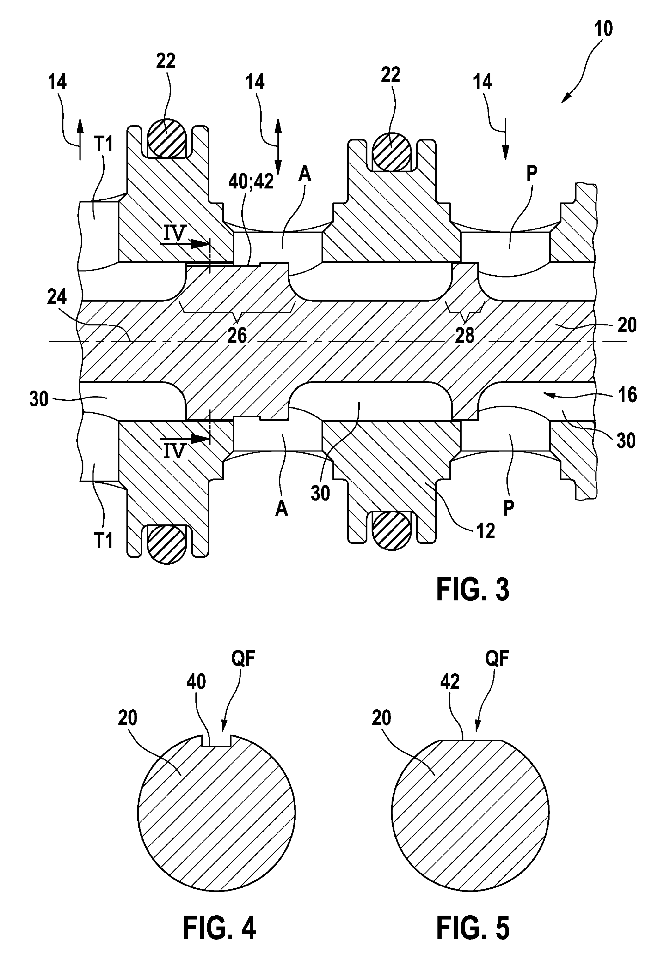

Figur 1 zeigt einen axialen Abschnitt eines Schieberventils 10 in einer Schnittdarstellung. Das Schieberventil 10 umfasst ein Gehäuse 12, welches in der Ansicht der Figur 1 einen Zulaufanschluss P, einen ersten Arbeitsanschluss A und einen ersten Ablaufanschluss T1 aufweist, welche vorliegend mittels radialer Bohrungen in dem Gehäuse 12 ausgeführt sind. Drei Pfeile 14 veranschaulichen die an den jeweiligen Anschlüssen vorgesehenen Strömungsrichtungen eines Fluids 16. Der Zulaufanschluss P, der erste Arbeitsanschluss A und der erste Ablaufanschluss T1 münden in eine axiale Längsbohrung 18 des Gehäuses 12, in welcher ein zylindrischer Ventilschieber 20 gleitend und geführt angeordnet ist. Weiterhin weist das Gehäuse 12 - in der Zeichnung der Figur 1 nicht dargestellte - radial umlaufende Dichtelemente 22 (siehe die Figur 3) auf. Die in der Zeichnung sichtbaren Hohlräume des Schieberventils 10 sind im Wesentlichen mit dem Fluid 16 (Hydrauliköl) gefüllt. Das Schieberventil 10 und der Ventilschieber 20 sind zumindest teilweise rotationsymmetrisch um eine Längsachse 24 ausgeführt.

Der Ventilschieber 20 weist in der Ansicht der Figur 1 je einen ersten und zweiten Steuerabschnitt 26 und 28 sowie drei sich axial erstreckende radial umlaufende und neben den Steuerabschnitten 26 und 28 angeordnete Ausnehmungen 30 auf. Der erste Steuerabschnitt 26 ist in einer axialen Umgebung des Arbeitsanschlusses A angeordnet und weist einen maximalen Durchmesser D2 auf. In seinem in der Zeichnung linken und zum Anschluss T1 weisenden Bereich weist der erste Steuerabschnitt 26 eine Durchmesserstufe 32 auf, bei welcher der Durchmesser D2 auf einen kleineren Durchmesser D3 übergeht. Die axiale Längsbohrung 18 weist einen in Bezug auf den Durchmesser D2 geringfügig größeren Durchmesser D1 auf.

Der zweite Steuerabschnitt 28 ist in einer axialen Umgebung des Zulaufanschlusses P angeordnet und weist einen Durchmesser D2 auf. Zwischen einer Kante des in dem Bereich des Zulaufanschlusses P angeordneten zweiten Steuerabschnitts 28 und einem damit hydraulisch korrespondierenden Abschnitt des Gehäuses 12 besteht vorliegend eine axiale Überdeckung I1. Im Bereich der axialen Überdeckung I1 liegt ein Durchmesserspiel S1 vor, entsprechend einer Formel:

$$S1 = D1 - D2$$

Zwischen jenem axialen Abschnitt des ersten Steuerabschnitts 26, welcher den Durchmesser D3 aufweist, und einem damit hydraulisch korrespondierenden Abschnitt des Gehäuses 12 besteht vorliegend eine axiale Überdeckung I2. An der axialen Überdeckung I2 ist ein Ringspalt 34 ausgebildet. Im Bereich des Ringspalts 34 liegt ein Durchmesserspiel S2 vor, entsprechend einer Formel:

$$S2 = D1 - D3$$

Mit den besagten Größen kann eine Formel für das Durchmesserspiel S2 gebildet werden:

$$S2 \;\; = \;\; x \cdot S1 \cdot \sqrt[3]{\frac{I2}{I1}} \quad ,$$

wobei x eine Größe zur Charakterisierung eines an dem Arbeitsanschluss A als Folge einer Leckage sich ergebenden hydraulischen Drucks ist. Beispielsweise weist die Größe x einen Wert von in etwa 4 bis in etwa 12 auf. In einer besonders bevorzugten Ausführungsform weist die Größe x einen Wert von 7 auf.

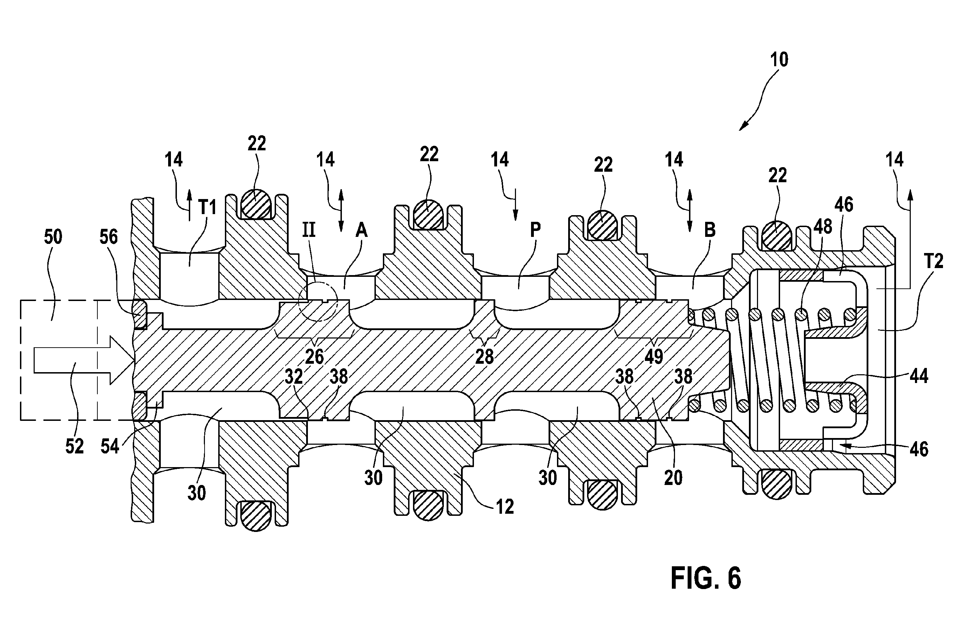

Das Schieberventil 10 der Figur 1 ist im stromlosen Zustand eines den Ventilschieber 20 beaufschlagenden Aktors 50 (siehe Figur 6) dargestellt ("Nullabschaltung"). Die Funktion des Schieberventils 10 wird in den nachfolgenden Figuren 6 bis 10 näher erklärt werden.

Figur 2 zeigt einen kreisförmigen Ausschnitt der Figur 1 in einer vergrößerten Ansicht. Dargestellt ist in der Figur 2 ein Abschnitt des ersten Steuerabschnitts 26. Man erkennt, dass im Bereich der Durchmesserstufe 32 ein durch einen Pfeil 36 gekennzeichneter umlaufender Spalt gebildet ist. Vorliegend ist die Durchmesserstufe 32 in etwa rampenförmig ausgebildet, es sind jedoch ebenso andere Formen möglich, beispielsweise in Form einer scharfen Kante oder einer Rundung. Ergänzend weist der erste Steuerabschnitt 26 im Bereich des Durchmessers D2 eine radial umlaufende Nut 38 auf.

Figur 3 zeigt eine zu der Figur 1 alternative Ausführungsform des Schieberventils 10 bzw. des Ventilschiebers 20. Dabei ist die axiale Position des Ventilschiebers 20 zu der Figur 1 vergleichbar. Die aus Gründen der Übersichtlichkeit in der Figur 1 nicht gezeigten radial umlaufenden Dichtelemente 22 sind in der Figur 3 zusammen mit den zugehörigen Abschnitten des Gehäuses 12 dargestellt. In der Figur 3 weist der erste Steuerabschnitt 26 eine im in der Zeichnung oberen Bereich des Ventilschiebers 20 sich axial erstreckende Nut 40 beziehungsweise eine sich axial erstreckende Abflachung 42 auf.

Figur 4 zeigt eine erste Alternative des Ventilschiebers 20 in einer Schnittansicht der Figur 3 entsprechend einer Linie IV-IV. Dargestellt ist dabei die sich axial erstreckende Nut 40.

Figur 5 zeigt eine zweite Alternative des Ventilschiebers 20 in einer Schnittansicht der Figur 3 entsprechend der Linie IV-IV. Dargestellt ist dabei die sich axial erstreckende Abflachung 42.

In den Ausführungsformen des Ventilschiebers 20 gemäß der Figuren 4 und 5 kann eine Querschnittsfläche QF der sich axial erstreckenden Nut 40 bzw. der sich axial erstreckenden Abflachung 42 (also die Fläche des nicht mehr vorhandenen Materials) nach folgender Formel bemessen sein:

$$ QF \;\; = \;\; x \cdot S1 \cdot D2, $$

wobei QF die Querschnittsfläche, x eine einen hydraulischen Druck des ersten Arbeitsanschlusses A charakterisierende Größe, S1 das Durchmesserspiel zwischen dem Ventilschieber 20 und der den Ventilschieber 20 führenden axialen Längsbohrung 18 in einem Dichtbereich, und D2 der maximale Durchmesser des Ventilschiebers 20 an dem Steuerabschnitt 26 sind. Beispielsweise weist die Größe x einen Wert von in etwa 2 bis in etwa 8 auf. In einer besonders bevorzugten Ausführungsform weist die Größe x einen Wert von 4 auf.

Figur 6 zeigt eine in Bezug auf die Figuren 1 und 3 erweiterte Schnittansicht des Schieberventils 10. Ergänzend sind in der Figur 6 im mittleren rechten Bereich der Zeichnung ein zweiter Arbeitsanschluss B, sowie im äußeren rechten Bereich ein zweiter Ablaufanschluss T2 dargestellt. Weiterhin ist in einem in der Zeichnung rechten Endabschnitt der axialen Längsbohrung 18 ein topfförmiges Gehäuseelement 44 angeordnet. Das Gehäuseelement 44 weist Aussparungen 46 auf, durch welche Fluid 16 zu dem zweiten Ablaufanschluss T2 fließen kann. Weiterhin ist zwischen einer inneren Stirnfläche des Gehäuseelements 44 und einem in der Zeichnung rechten Endabschnitt des Ventilschiebers 20 eine axial wirkende Beaufschlagungseinrichtung in Form einer Ventilfeder 48 angeordnet. In einer axialen Umgebung des zweiten Arbeitsanschlusses B weist der Ventilschieber 20 einen dritten Steuerabschnitt 49 auf.

An einem in der Zeichnung der Figur 6 linken Endabschnitt des Ventilschiebers 20 kann der Ventilschieber 20 von einem axial wirkenden Aktor 50 durch eine Druckkraft beaufschlagt werden. Die Wirkrichtung des Aktors 50 ist durch einen Pfeil 52 gekennzeichnet. Der Aktor 50 ist beispielsweise ein Elektromagnet und ist lediglich durch einen gestrichelten Kasten symbolisch dargestellt. Am einem in der Zeichnung der Figur 6 linken Endabschnitt weist der Ventilschieber 20 einen Anschlagring 54 auf, mittels welchem der Ventilschieber 20 an einem gehäusefesten ringförmigen Anschlag 56 angeschlagen ist.

In der Figur 6 ist der Aktor 50 stromlos geschaltet und übt daher keine Kraft auf den Ventilschieber 20 aus. Somit kann die Ventilfeder 48 den Ventilschieber 20 gegen den ringförmigen Anschlag 56 drücken. Der Ventilschieber 20 befindet sich somit - ebenso wie in der Figur 1 - in einer in der Zeichnung linken Endposition. Damit ergibt sich das folgende Verhalten des Schieberventils 10:

- Der erste Arbeitsanschluss A ist gemäß Figur 2 über einen durch den Pfeil 36 bezeichneten Spalt sowie über jenen Teil des ersten Steuerabschnitts 26, welcher den Durchmesser D3 aufweist, mit der besagten Ausnehmung 30 und somit mit dem ersten Ablaufanschluss T1 hydraulisch verbunden. Durch den derart vergrößerten "Entlüftungsquerschnitt" zwischen dem ersten Arbeitsanschluss A und dem ersten Ablaufanschluss T1 wird ein über die Leckage vom Zulaufanschluss P zum ersten Arbeitsanschluss A entstehender Druckaufbau am ersten Arbeitsanschluss A im Wesentlichen verhindert.

- Der Zulaufanschluss P ist mittels des zweiten Steuerabschnitts 28 von dem ersten Arbeitsanschluss A hydraulisch getrennt.

- Der zweite Arbeitsanschluss B ist mittels des dritten Steuerabschnitts 49 von dem Zulaufanschluss P hydraulisch getrennt. Zugleich ist der zweite Arbeitsanschluss B mit dem zweiten Ablaufanschluss T2 hydraulisch verbunden.

Wenn der erste Arbeitsanschluss A mit einer ersten Kammer und der zweite Arbeitsanschluss B mit einer zweiten Kammer eines doppelt wirkenden Hydraulikzylinders (nicht dargestellt) verbunden sind, so sind entsprechend der vorliegenden Position des Ventilschiebers 20 diese beiden Kammern jeweils mit dem ersten Ablaufanschluss T1 bzw. dem zweiten Ablaufanschluss T2 hydraulisch verbunden und somit im Wesentlichen drucklos oder weisen zumindest einen gleichen Druck auf. Ein Kolben des doppelt wirkenden Hydraulikzylinders kann somit in seiner aktuellen Lage verharren. Beispielsweise ist der doppelt wirkende Hydraulikzylinder ein Element einer Getriebesteuerung eines Kraftfahrzeug-Automatikgetriebes, wobei aktuell eine Gangstufe eingelegt ist und für eine bestimmte Zeit beibehalten wird.

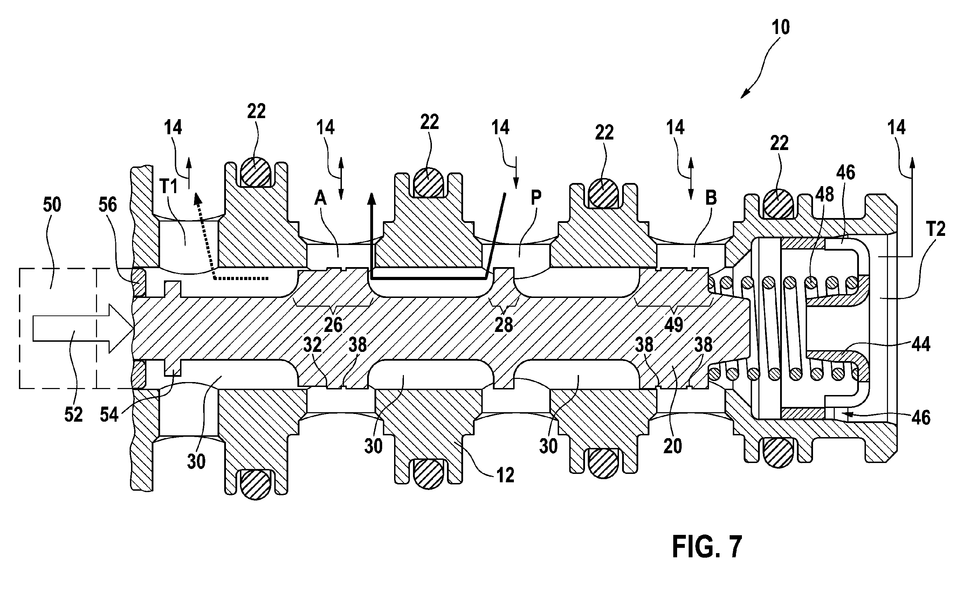

Figur 7 zeigt das Schieberventil 10 der Figur 6 in einem Zustand, in welchem der Aktor 50 mit einer ersten Energie bzw. einem ersten Strom angesteuert ist. In Bezug auf die Figur 6 ist der Ventilschieber 20 der Figur 7 somit um ein erstes Maß (ohne Bezugszeichen) in der Zeichnung nach rechts verschoben.

Damit ergibt sich das folgende Verhalten des Schieberventils 10:

- Der erste Ablaufanschluss T1 ist mit einer der umlaufenden Ausnehmungen 30 hydraulisch verbunden und kann somit Fluid 16 abführen.

- Der erste Arbeitsanschluss A ist über jenen Teil des ersten Steuerabschnitts 26, welcher den Durchmesser D3 aufweist, mit der besagten Ausnehmung 30 und somit mit dem ersten Ablaufanschluss T1 hydraulisch verbunden. Dies ist in der Zeichnung durch einen gestrichelten Pfeil angedeutet. Weil das Durchmesserspiel S2 = D2 - D3 vergleichsweise klein ist, ist der Abfluss von Fluid 16 von dem ersten Arbeitsanschluss A zu dem ersten Ablaufanschluss T1 ebenfalls vergleichsweise klein. Die axiale Überdeckung I2 ist in Bezug auf die Figur 6 jedoch geringer.

- Der Zulaufanschluss P ist mit dem ersten Arbeitsanschluss A hydraulisch verbunden. Dies ist in der Zeichnung durch einen Pfeil angedeutet.

- Der zweite Arbeitsanschluss B ist mittels des dritten Steuerabschnitts 49 von dem Zulaufanschluss P hydraulisch getrennt. Zugleich ist der zweite Arbeitsanschluss B mit dem zweiten Ablaufanschluss T2 hydraulisch verbunden.

Insgesamt kann somit eine erste Arbeitsbewegung des oben beschriebenen doppelt wirkenden Hydraulikzylinders erfolgen, wobei die mit dem ersten Arbeitsanschluss A verbundene Kammer mit dem am Zulaufanschluss P herrschenden Arbeitsdruck gefüllt und die mit dem zweiten Arbeitsanschluss B verbundene Kammer entleert werden.

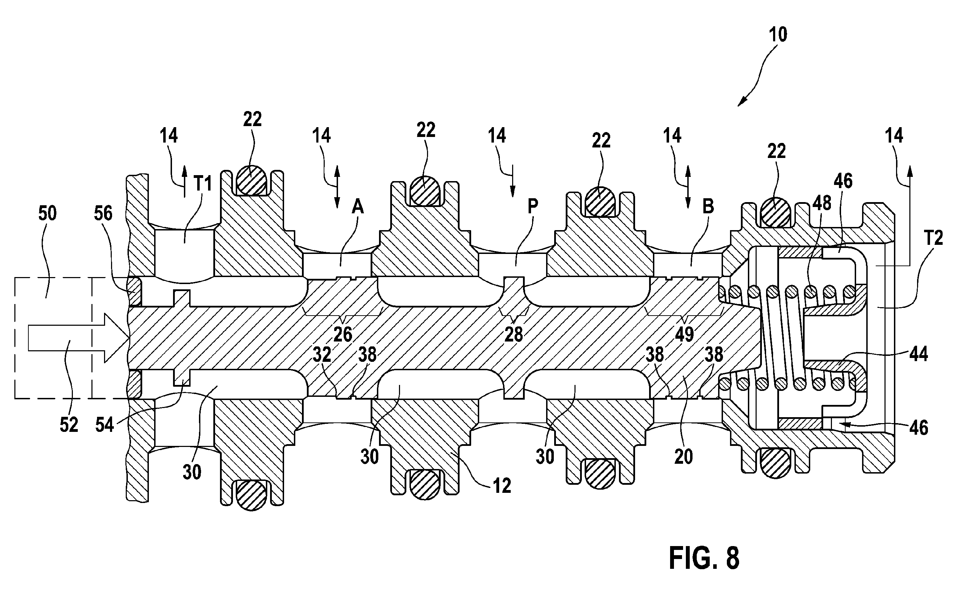

Figur 8 zeigt das Schieberventil 10 der Figur 6 in einem Zustand, in welchem der Aktor 50 mit einer zweiten Energie bzw. einem zweiten Strom angesteuert ist. In Bezug auf die Figur 6 ist der Ventilschieber 20 der Figur 8 somit um ein zweites Maß (ohne Bezugszeichen) - welches in Bezug auf die Figur 7 größer ist - in der Zeichnung nach rechts verschoben.

Damit ergibt sich das folgende Verhalten des Schieberventils 10:

- Der erste Ablaufanschluss T1 ist mit einer der umlaufenden Ausnehmungen 30 hydraulisch verbunden und kann somit Fluid 16 abführen.

- Der erste Arbeitsanschluss A ist über jenen Teil des ersten Steuerabschnitts 26, welcher den Durchmesser D3 aufweist, mit der besagten Ausnehmung 30 und somit mit dem ersten Ablaufanschluss T1 hydraulisch verbunden. Die axiale Überdeckung I2 ist in Bezug auf die Figur 7 jedoch geringer und beträgt beinahe null oder ist geringfügig negativ.

- Der Zulaufanschluss P ist von dem ersten Arbeitsanschluss A und von dem zweiten Arbeitsanschluss B hydraulisch getrennt.

- Der zweite Arbeitsanschluss B ist von dem Zulaufanschluss P mittels des dritten Steuerabschnitts 49 hydraulisch getrennt. Zugleich ist der zweite Arbeitsanschluss B mit dem zweiten Ablaufanschluss T2 hydraulisch verbunden. Insgesamt ergibt sich somit eine "Mittelstellung" des Schieberventils 10 und eine zu der Figur 6 ähnliche hydraulische Wirkung.

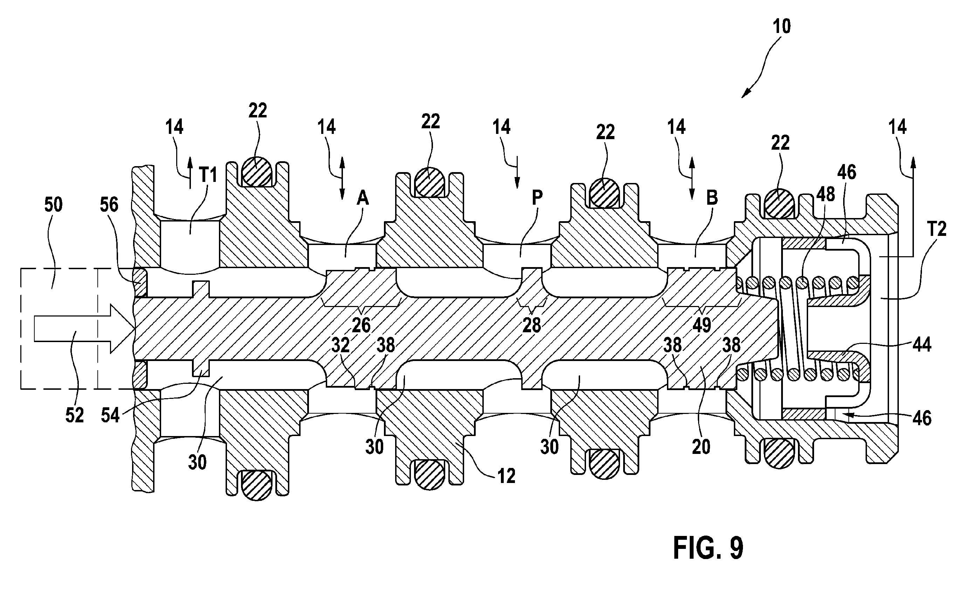

Figur 9 zeigt das Schieberventil 10 der Figur 6 in einem Zustand, in welchem der Aktor 50 mit einer dritten Energie bzw. einem dritten Strom angesteuert ist. In Bezug auf die Figur 6 ist der Ventilschieber 20 der Figur 9 somit um ein drittes Maß (ohne Bezugszeichen) - welches in Bezug auf die Figur 8 größer ist - in der Zeichnung nach rechts verschoben.

Damit ergibt sich das folgende Verhalten des Schieberventils 10:

- Der erste Ablaufanschluss T1 ist mit einer der umlaufenden Ausnehmungen 30 hydraulisch verbunden und kann somit Fluid 16 abführen.

- Der erste Arbeitsanschluss A ist mit dem ersten Ablaufanschluss T1 hydraulisch verbunden.

- Der Zulaufanschluss P ist von dem ersten Arbeitsanschluss A hydraulisch getrennt.

- Der zweite Arbeitsanschluss B ist mit dem Zulaufanschluss P hydraulisch verbunden und von dem zweiten Ablaufanschluss T2 hydraulisch getrennt.

Insgesamt kann somit eine zweite Arbeitsbewegung des oben beschriebenen doppelt wirkenden Hydraulikzylinders erfolgen, wobei die mit dem ersten Arbeitsanschluss A verbundene Kammer entleert und die mit dem zweiten Arbeitsanschluss B verbundene Kammer mit dem am Zulaufanschluss P herrschenden Arbeitsdruck gefüllt werden.

Es versteht sich, dass die Anordnung und/oder die Reihenfolge und/oder die Anzahl der Arbeitsanschlüsse A und B, des Zulaufanschlusses P bzw. von Zulaufanschlüssen P, und eines Ablaufanschlusses T bzw. der Ablaufanschlüsse T1 und T2 von der Ausführungsform der Figuren 1 bis 9 gegebenenfalls abweichen kann. Beispielsweise ist es denkbar, einen - in der Zeichnung - "mittigen" Ablaufanschluss T und einen "linken" und einen "rechten" Zulaufanschluss P1 und P2 vorzusehen. Dies ist in den Figuren 1 bis 9 jedoch nicht gezeigt.

**Patentansprüche**

1. Schieberventil (10), mit einem durch einen Aktor (50) in einer ersten Richtung und durch eine Beaufschlagungseinrichtung (48) in einer zweiten, der ersten entgegengesetzten Richtung beaufschlagbaren Ventilschieber (20), welcher mittels Steuerabschnitten (26, 28, 49) einen ersten Arbeitsanschluss (A) mit einem Zulaufanschluss (P) oder einem Ablaufanschluss (T1), und einen zweiten Arbeitsanschluss (B) mit einem bzw. dem Zulaufanschluss (P) oder einem bzw. dem Ablaufanschluss (T1, T2) hydraulisch verbinden kann, **dadurch gekennzeichnet, dass** ein dem ersten Arbeitsanschluss (A) zugeordneter Steuerabschnitt (26) eine Durchmesserstufe (32) und/oder eine sich axial erstreckende Nut (40) und/oder eine sich axial erstreckende Abflachung (42) aufweist, derart, dass dann, wenn der Aktor (50) den Ventilschieber (20) nicht beaufschlagt, der erste Arbeitsanschluss (A) mit dem Ablaufanschluss (T1) mittels der Durchmesserstufe (32) und/oder der Nut (40) und/oder der Abflachung (42) hydraulisch verbunden ist.

2. Schieberventil (10) nach Anspruch 1, **dadurch gekennzeichnet, dass** es als ein 4/4-Wegeventil ausgeführt ist.

3. Schieberventil (10) nach Anspruch 1 oder 2, **dadurch gekennzeichnet, dass** ein Durchmesserspiel (S2) zwischen dem Ventilschieber (20) und einer den Ventilschieber (20) führenden axialen Bohrung (18) in einem Bereich der Durchmesserstufe (32) gemäß folgender Formel bemessen ist:

$$S2 \;=\; x \cdot S1 \cdot \sqrt[3]{\frac{I2}{I1}},$$

wobei S2 das Durchmesserspiel, x eine einen hydraulischen Druck des ersten Arbeitsanschlusses (A) charakterisierende Größe, S1 ein Durchmesserspiel zwischen dem Ventilschieber (20) und der den Ventilschieber (20) führenden axialen Bohrung (18) in einem Dichtbereich, I1 eine axiale Überdeckung eines Steuerabschnitts (28) in einem Bereich des Zulaufanschlusses (P), und I2 eine axiale Überdeckung der Durchmesserstufe (32) in einem Bereich des ersten Arbeitsanschlusses (A) sind.

4. Schieberventil (10) nach Anspruch 3, **dadurch gekennzeichnet, dass** die Größe x einen Wert in einem Bereich von x=4 bis x=12, vorzugsweise x=7 aufweist.

5. Schieberventil (10) nach wenigstens einem der vorhergehenden Ansprüche, **dadurch gekennzeichnet, dass** eine Querschnittsfläche (QF) der Nut (40) bzw. der Abflachung (42) gemäß folgender Formel bemessen ist:

$$QF \;=\; x \cdot S1 \cdot D2 ,$$

wobei QF die Querschnittsfläche, x eine einen hydraulischen Druck des ersten Arbeitsanschlusses (A) charakterisierende Größe, S1 ein Durchmesserspiel zwischen dem Ventilschieber (20) und einer den Ventilschieber (20) führenden axialen Bohrung (18) in einem Dichtbereich, und D2 ein Durchmesser des Ventilschiebers (20) an einem Steuerabschnitt (26, 28, 49) sind.

6. Schieberventil (10) nach Anspruch 5, **dadurch gekennzeichnet, dass** die Größe x einen Wert in einem Bereich von x=2 bis x=8, vorzugsweise x=4 aufweist.

7. Automatikgetriebe für ein Kraftfahrzeug, das von mindestens einem doppelt wirkenden Hydraulikzylinder betätigt werden kann, **dadurch gekennzeichnet, dass** es ein Schieberventil (10) nach einem der vorhergehenden Ansprüche aufweist.

**Claims**

1. Slide valve (10), having a valve slide (20) which can be loaded by way of an actuator (50) in a first direction and by way of a loading device (48) in a second direction which is opposed to the first direction, which valve slide (20), by means of control sections (26, 28, 49), can hydraulically connect a first working connector (A) to an inlet connector (P) or an outlet connector (TI), and a second working connector (B) to a or the inlet connector (P) or a or the outlet connector (T1, T2), **characterized in that** a control section (26) which is assigned to the first working connector (A) has a diameter step (32) and/or an axially extending groove (40) and/or an axially extending flattened portion (42), in such a way that, when the actuator (50) does not load the valve slide (20), the first working connector (A) is hydraulically connected to the outlet connector (T1) by means of the diameter step (32) and/or the groove (40) and/or the flattened portion (42).

2. Slide valve (10) according to Claim 1, **characterized in that** it is configured as a 4/4-way valve.

3. Slide valve (10) according to Claim 1 or 2, **characterized in that** a diameter play (S2) between the valve slide (20) and an axial bore (18) which guides the valve slide (20) is dimensioned in a region of the diameter step (32) according to the following formula:

$$S2 \ = \ x \cdot S1 \cdot \sqrt[3]{\frac{I2}{I1}} \, ,$$

wherein S2 is the diameter play, x is a variable which characterizes a hydraulic pressure of the first working connector (A), S1 is a diameter play between the valve slide (20) and the axial bore (18) which guides the valve slide (20) in a sealing region, I1 is an axial overlap of a control section (28) in a region of the inlet connector (P), and I2 is an axial overlap of the diameter step (32) in a region of the first working connector (A).

4. Slide valve (10) according to Claim 3, **characterized in that** the variable x has a value in the range from x = 4 to x = 12, preferably x = 7.

5. Slide valve (10) according to at least one of the preceding claims, **characterized in that** a cross-sectional area (QF) of the groove (40) or the flattened portion (42) is dimensioned according to the following formula: QF = x · S1 · D2, wherein QF is the cross-sectional area, x is a variable which characterizes a hydraulic pressure of the first working connector (A), S1 is a diameter play between the valve slide (20) and an axial bore (18) which guides the valve slide (20) in a sealing region, and D2 is a diameter of the valve slide (20) at a control section (26, 28, 49).

6. Slide valve (10) according to Claim 5, **characterized in that** the variable x has a value in a range from x = 2 to x = 8, preferably x = 4.

7. Automatic transmission for a motor vehicle, which automatic transmission can be actuated by at least one double acting hydraulic cylinder, **characterized in that** it has a slide valve (10) according to one of the preceding claims.

**Revendications**

1. Distributeur (10), avec un tiroir (20) actionnable par un actionneur (50) dans une première direction et par un dispositif d'actionnement (48) dans une deuxième direction opposée à la première, qui peut raccorder hydrauliquement, au moyen de sections de commande (26, 28, 49), un premier raccord de travail (A) à un raccord d'arrivée (P) ou à un raccord d'évacuation (TI), et un deuxième raccord de travail (B) à un ou au raccord d'arrivée (P) ou à un ou au raccord d'évacuation (T1, T2), **caractérisé en ce qu'**une section de commande (26) associée au premier raccord de travail (A) présente un degré diamétral (32) et/ou une rainure s'étendant axialement (40) et/ou un méplat s'étendant axialement (42), de telle manière que, lorsque l'actionneur (50) n'actionne pas le tiroir (20), le premier raccord de travail (A) soit raccordé hydrauliquement au raccord d'évacuation (T1) au moyen du degré diamétral (32) et/ou de la rainure (40) et/ou du méplat (42).

2. Distributeur (10) selon la revendication 1, **caractérisé en ce qu'**il est constitué par une vanne à 4/4 voies.

3. Distributeur (10) selon la revendication 1 ou 2, **caractérisé en ce qu'**un jeu diamétral (S2) entre le tiroir (20) et un alésage axial (18) guidant le tiroir (20) dans une région du degré diamétral (32) est dimensionné par la formule suivante $S2 = x \cdot S1 \cdot \sqrt[3]{\dfrac{l2}{l1}}$, dans laquelle S2 est le jeu diamétral, x est une grandeur caractérisant une pression hydraulique du premier raccord de travail (A), S1 un jeu diamétral entre le tiroir (20) et l'alésage axial (18) guidant le tiroir (20) dans une région d'étanchéité, I1 un recouvrement axial de la section de commande (28) dans une région du raccord d'arrivée (P), et 12 un recouvrement axial du degré diamétral (32) dans une région du premier raccord de travail (A).

4. Distributeur (10) selon la revendication 3, **caractérisé en ce que** la grandeur x présente une valeur comprise dans une plage de x=4 à x=12, de préférence x=7.

5. Distributeur (10) selon au moins une des revendications précédentes, **caractérisé en ce qu'**une aire de section transversale (QF) de la rainure (40), ou du méplat (42) est dimensionnée selon la formule suivante: *QF = x · S*1 · *D*2, dans laquelle QF est l'aire de la section transversale, x est une grandeur caractérisant une pression hydraulique du premier raccord de travail (A), S1 un jeu diamétral entre le tiroir (20) et un alésage axial (18) guidant le tiroir (20) dans une région d'étanchéité, et D2 est un diamètre du tiroir (20) à une section de commande (26, 28, 49).

6. Distributeur (10) selon la revendication 5, **caractérisé en ce que** la grandeur x présente une valeur comprise dans une plage de x=2 à x=8, de préférence x=4.

7. Boîte de vitesses automatique pour un véhicule automobile, qui peut être actionnée par au moins un cylindre hydraulique à double effet, **caractérisée en ce qu'**elle présente un distributeur (10) selon l'une quelconque des revendications précédentes.

**FIG. 1**

**FIG. 2**

**FIG. 3**

**FIG. 4**

**FIG. 5**

FIG. 6

FIG. 7

EP 2 742 264 B1

FIG. 8

EP 2 742 264 B1

FIG. 9

EP 2 742 264 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4319162 A

- WO 20070023722 A